# EUROPÄISCHE PATENTSCHRIFT

(11) **EP 0 462 436 B1**
(45) Veröffentlichungstag und Bekanntmachung des Hinweises auf die Patenterteilung: **24.02.1993**
(21) Anmeldenummer: 91108945.6
(22) Anmeldetag: 31.05.1991
(51) Int. Cl.: E01B 9/14, F16B 13/00

(54) **Dübel mit viskosem Füllstoff**
Plug with viscous filler material
Cheville avec matière visqueuse de remplissage

(30) Priorität: 21.06.1990 DE 4019770
(43) Veröffentlichungstag der Anmeldung: 27.12.1991
(73) Patentinhaber: Wayss & Freytag Aktiengesellschaft, D-60486 Frankfurt (DE)
(72) Erfinder: Schimpff, Frithjof, Dipl.-Ing., W-6200 Wiesbaden (DE); Puntke, Wolfgang, Dipl.-Ing., W-6230 Frankfurt a.M. 80 (DE)

(56) Entgegenhaltungen:
- EP-A- 0 222 095
- EP-A- 0 227 897
- DE-A- 2 701 181
- DE-A- 3 709 390
- FR-A- 1 296 107

## Beschreibung

Die Erfindung betrifft einen sacklochförmigen Dübel, wie er im Oberbegriff des Anspruchs 1 beschrieben ist.

Bei Betonschwellen werden die Schienenbefestigungsmittel mittels Schwellenschrauben, die in in der Schwelle eingebaute Dübel eingedreht sind, auf der Schwelle verankert. In der Regel wird bereits bei der Schwellenfertigung im Herstellerbetrieb das Schienenbefestigungsmaterial auf der Schwelle vormontiert. Bei der Endmontage werden nur noch die Schienen auf die Schwellen aufgelegt und durch Verschieben der Spannklemmen und Anziehen der Befestigungsschrauben mit der Schwelle verbunden.

Aus Gründen des wirtschaftlichen Einbaus in der Schalung werden möglichst kurze, gegen das Eindringen von Beton während der Schwellenherstellung mit geschlossenem Boden versehene Dübel verwendet.

Um die Schwellenschrauben über lange Zeit gängig zu halten, und um das Eindringen von Wasser in den Dübel zu verhindern, wird der Dübel-Innenraum mit einem geeigneten Korrosionsschutzstoff gefüllt. Dieser Füllstoff hat die Eigenschaften einer hochviskosen Flüssigkeit. Flüssigkeiten sind praktisch inkompressibel. Bei der hochmechanisierten Endmontage der Gleise werden die Schwellenschrauben mit so hoher Geschwindigkeit maschinell in den Dübel eingedreht, daß der zähflüssige Füllstoff nicht schnell genug durch den engen Spalt zwischen Dübelinnenwand und Schraubenaußenfläche entweichen kann. Durch Kompression des Füllstoffs entsteht unter der Schraube im Dübel ein hoher Flüssigkeitsdruck auf die Dübelwandung, der die Schwelle auseinandersprengen kann.

Um eine Ausdehnungsmöglichkeit für den Füllstoff zu schaffen, wurde bereits der Dübel mit einer Ausdehnungsraum unter dem Dübelboden schaffenden Kappe oder mit einem Schaumstoffaufsatz versehen. Der zweiteilige Dübel ist teurer als der einfache Dübel und die Schutzwirkung des Korrosionsschutzmittels gegen eindringendes Wasser ist nach Aufplatzen des Dübelbodens und Verdrängen des Mittels in dem Ausdehnungsraum nicht mehr gegeben. Durch den Hohlraum unter dem Dübel wird zwar die Gefahr des Aufspaltens der Schwelle beseitigt, das Korrosionsschutzmittel wird jedoch beim Einschrauben der Schwellenschraube in diesen Hohlraum verdrängt. Die notwendige Auspressung des Schutzmittels nach oben in den zwischen Schraube und Dübelwand verbleibenden Hohlraum kann nicht stattfinden. In diesem Hohlraum kann Wasser von oben eindringen.

Die Erfindung hat die Aufgabe, einen Dübel mit einem Füllstoff zu entwickeln, der die für die Schmierung und den Korrosionsschutz der im Dübel zu verankernden Schraube nötige Fließfähigkeit aufweist, und so ausreichend kompressibel ist, daß auch beim mechanisierten Eindrehen der Schraube in den Dübel kein zu hoher, das umgebende Material sprengender Druck des Füllstoffs auf die Dübelwände ausgeübt wird.

Die Aufgabe wird durch einen Dübel gelöst, wie er im kennzeichnenden Teil des Anspruchs 1 beschrieben ist. Ausgestaltungen sind in den Ansprüchen 2 - 6 angegeben.

Die erfindungsgemäßen Eigenschaften des Dübels werden durch Füllung des Dübels mit einem zweckentsprechend aufgebauten Füllstoff aus einer viskosen,gegen Korrosion schützenden Trägermatrix, die von Hohlräumen oder kompressiblen Partikeln durchsetzt ist. Derartige Stoffe sind aus anderen Verwendungsbereichen, wie beispielsweise aus der DF OS 2701 181, an sich bekannt. Durch die gasgefüllten Hohlräume bzw. die kompressiblen Partikel wird die Kompressibilität des sonst wie eine Flüssigkeit wirkenden Füllstoffs erreicht. Sie muß ausreichen, um den durch die Kompression des Füllstoffs beim Eindrehen der Schraube erzeugten Druck auf die Dübelwände unterhalb einer schädlichen Größe zu halten.

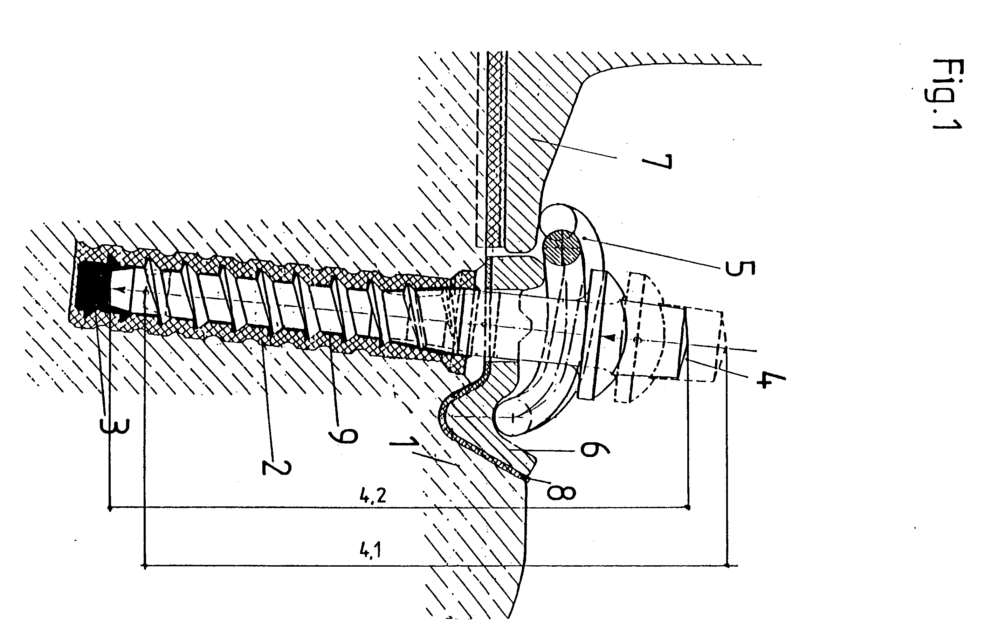

Die Erfindung wird anhand der Fig. 1 erläutert.

Fig. 1 zeigt einen Detailschnitt parallel zur Längsachse der Schwelle 1 durch einen Dübel 2. In den Dübel 2 ist korrosionsschützender Füllstoff 3 eingefüllt.

Zur Befestigung der Schiene auf der Schwelle 1 wird durch Eindrehen der Schwellenschraube 4 in den Dübel 2 die Spannfeder 5 niedergedrückt und damit einerseits die Winkelführungsplatte 6 zwischen Schienenfuß 7 und Widerlagerschulter 8 der Schwelle 1 gedrückt und die Schiene gegen seitliche Verschiebung gehalten, andererseits der Schienenfuß 7 niedergedrückt und damit die Schiene gegen vertikales Abheben gesichert.

Beim Eindrehen der Schwellenschraube 4 verdrängt die Schwellenschraube den korrosionsschützenden Füllstoff 3 im Dübel 2 in den zwischen Schwellenschraube und Dübelinnenwand verbleibenden Hohlraum 9 und aus dem Dübel und verhindert so das Eindringen von Wasser in diesen Hohlraum und das Entstehen von Korrosion.

Die Schwellenschraube 4 hat nach der Endmontage der Schiene auf der Schwelle 1 die Stellung 4.2. Die Schwellenschraube 4 wird nach Fertigung der Spannfeder 5 und Winkelführungsplatte 6 in Stellung 4.1 in den Dübel 2 eingedreht und in der Schwelle 1 vormontiert zur Endmontage angeliefert. Bei der Endmontage wird die Schwellenschraube 4 durch mechanisiertes Eindrehen aus der Stellung 4.1 in die Stellung 4.2 gebracht und verdrängt dabei den Füllstoff 3 aus dem unteren Innenraum des Dübels 2 in den Hohlraum 9 zwischen Schwellenschraube 4 und Innenwand des Dübels.

## Patentansprüche

1. Sacklochförmiger Dübel (2) zur Verankerung von Schrauben (4), vornehmlich für Schwellenschrauben in Spannbetonschwellen (1), mit einem viskosen Füllstoff (3), der den Innenraum des Dübels zum Korrisionsschutz vollständig füllt, **dadurch** **gekennzeichnet**, daß der Füllstoff (3) von Hohlräumen bzw. Poren oder kompressiblen Partikeln durchsetzt ist.

2. Dübel nach Anspruch 1, **dadurch gekennzeichnet,** daß der Füllstoff (3) mit mechanisch - beispielsweise durch Rühren - eingebrachter Gasblasen durchsetzt ist.

3. Dübel nach Anspruch 1, **dadurch gekennzeichnet,** daß der Füllstoff (3) mit chemisch durch Gasbildung erzeugten Poren durchsetzt ist.

4. Dübel nach Anspruch 1, dadurch gekennzeichnet, daß der Füllstoff (3) mit fein verteilten, feinkörnigen, blasenförmigen Hohlkörpern durchsetzt ist.

5. Dübel nach Anspruch 1, **dadurch gekennzeichnet**, daß der Füllstoff (3) mit fein verteilten, feinkörnigen, kompressiblen Kunstoffpartikeln durchsetzt ist.

6. Dübel nach Anspruch 1, **dadurch gekennzeichnet,** daß die Trägermasse des Füllstoffs (3) auf Paraffin- oder Fettbasis aufgebaut ist.

## Claims

1. Pocket-hole dowel (2) for anchoring screws (4), particularly coach screws for prestressed concrete sleepers (1), with a viscous filler (3) that fills the dowel interior completely for corrosion protection purposes, characterized in that the filler (3) is interspersed with voids, pores, or compressible particles.

2. Dowel according to Claim 1, characterized in that the filler (3) is interspersed with gas bubbles mechanically introduced, e.g. by stirring.

3. Dowel according to Claim 1, characterized in that the filler (3) is interspersed with pores chemically produced by gas formation.

4. Dowel according to Claim 1, characterized in that the filler (3) is interspersed with finely divided, fine-grain, bubble-like voids.

5. Dowel according to Claim 1, characterized in that the filler (3) is interspersed with finely divided, fine-grain, compressible plastic particles.

6. Dowel according to Claim 1, characterized in that the filler (3) carrier is based on paraffin or grease.

## Revendications

1. Cheville (2) en forme de trou borgne pour l'ancrage de vis (4), surtout pour des tirefonds dans les traverses en béton précontraint (1), avec une masse de remplissage visqueuse (3) qui remplit complètement l'intérieur de la cheville pour protection contre la corrosion, caractérisée en ce que la masse de remplissage (3) est chargée d'espaces vides, de pores ou de particules compressibles.

2. Cheville selon la revendication 1, caractérisée en ce que la masse de remplissage (3) est chargée de soufflures mécaniquement introduites, par exemple en agiter.

3. Cheville selon la revendication 1, caractérisée en ce que la masse de remplissage (3) est chargée de pores produites chimiquement par formation de gaz.

4. Cheville selon la revendication 1, caractérisée en ce que la masse de remplissage (3) est chargée de creux finement divisés, à grains fins et en forme de soufflures.

5. Cheville selon la revendication 1, caractérisée en ce que la masse de remplissage (3) est chargée de particules en matière plastique finement divisées, à grains fins et compressibles.

6. Cheville selon la revendication 1, caractérisée en ce que la matière porteuse de la masse de remplissage (3) se fond sur la paraffine ou sur la graisse.
